# FASCICULE DE BREVET EUROPEEN

(11) **EP 3 515 768 B1**
(45) Date de publication et mention de la délivrance du brevet: **06.11.2024**
(21) Numéro de dépôt: 17772454.9
(22) Date de dépôt: 14.09.2017
(51) Int. Cl.: B60T 13/04, F16D 59/02, F16D 65/18

(54) **SYSTEME DE FREINAGE PAR MANQUE DE COURANT**
STROM-AUS-BREMSSYSTEM
POWER-OFF BRAKING SYSTEM

(30) Priorité: 21.09.2016 FR 1601376
(43) Date de publication de la demande: 31.07.2019
(73) Titulaire: KENDRINOV S.A., 1630 Bulle (CH)
(72) Inventeur: LORIOT, Jean-Marc, 75015 Paris (FR); SALESSE, Christian, 19340 Laroche près Feyt (FR)
(74) Mandataire: Weihs, Bruno Konrad
(86) Numéro de dépôt international: PCT/FR2017/000167
(87) Numéro de publication internationale: WO 2018/055243

(56) Documents cités:
- EP-A1- 1 957 228
- WO-A1-03/052286
- FR-A- 1 264 059
- US-A1- 2010 147 633
- US-A1- 2011 056 776

## Description

La présente invention a pour objectif de créer un système de freinage qui assure le serrage du frein à sa valeur maxi, et son maintien, chaque fois que son alimentation électrique n'est plus assurée, pour des raisons accidentelles ou volontaires.

Le document FR 1 264 059 A décrit un frein électromagnétique à manque dé courant.

On connaît le brevet européen numéro 1 957 228 du 03.11.2006 relatif à un système de freinage électrique. Ce dispositif utilise un système à gain mécanique variable disposé entre l'arbre moteur et le système de serrage des plaquettes. Si on prend un cahier des charges de frein automobile, pour lequel l'effort sur les plaquettes varie de 0 à 15 kN, avec une déformation élastique de 1 mm, l'énergie nécessaire pour la réalisation de cette opération est de 7,5 Joules.

La course maxi de l'équipage mobile de ce frein est, par construction, de 2,5 rad (inférieure à ½ tour). Si, grâce au système à gain mécanique variable, on ramène au moteur pendant cette opération un couple constant, celui-ci aura, pour délivrer une énergie de 7,5 Joules, une valeur de 3 Nm.

Ce sont ces valeurs relativement faibles du couple et de la course qui permettent d'envisager cette solution qui consiste à stocker, à chaque mise en route l'énergie qui, en cas de coupure d'alimentation assurera le serrage du frein par manque de courant, et son maintien.

Les caractéristiques de ces mouvements nous poussent à priori à stocker cette énergie sous une forme mécanique dans des ressorts disposés dans la structure même du frein, cela dit, une solution électrique, notamment par des condensateurs n'est pas à exclure.

Ce frein à manque de courant va fonctionner en frein d'urgence, il peut aussi être utilisé en frein de parking, assurant l'arrêt du véhicule pendant tout le temps de sa non alimentation. Il peut remplacer le « frein à main ».

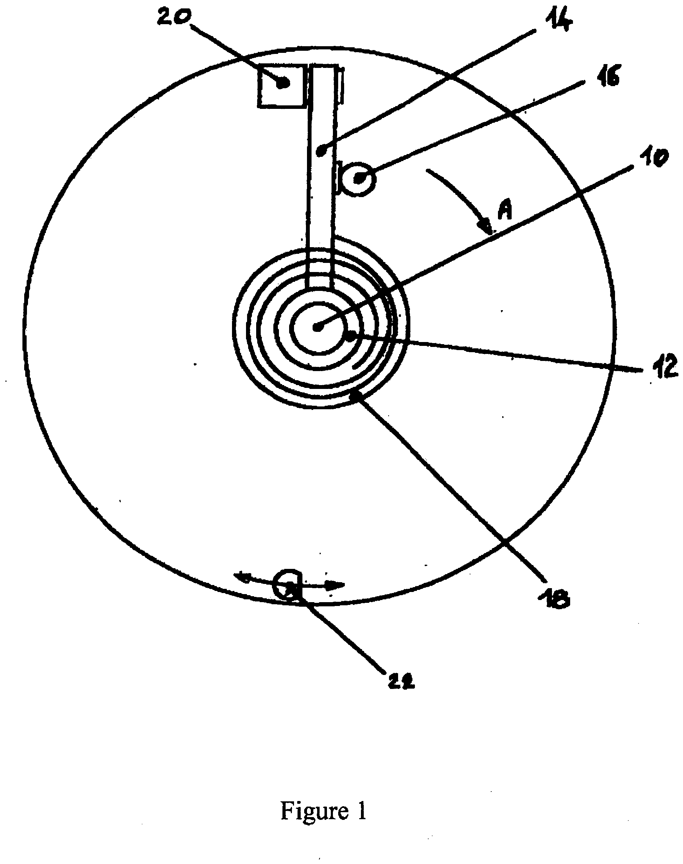

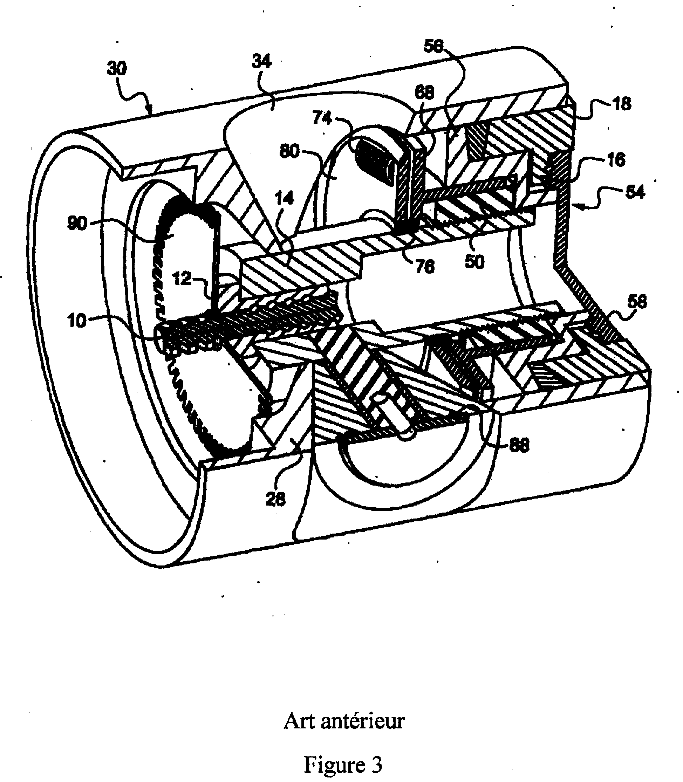

Dans la description qui suit donnée à titre d'exemple, on reconnaît, figure 1, l'arbre moteur 10 (solidaire de la vis de même numéro 10 que celui de la figure 6 du brevet ci-dessus référencé, cette figure, référence figure 3, est jointe à titre indicatif au présent brevet). Un moyeu 12 est monté libre en rotation sur cet arbre 10. Ce moyeu porte un bras 14 qui, dans ce cas de figure est plaqué contre un électro-aimant 20, celui-ci, lorsqu'il est alimenté le maintient dans cette position. Un ressort spirale 18 exerce sur le bras 14 un effort qui tend à le faire tourner dans le sens A avec un couple, pour l'application automobile, au minimum égal à 3 Nm en fin de course. Le sens de déplacement A correspond à celui du serrage du frein qu'il actionne, ce sens peut être inversé, si les caractéristiques propres des vis et des gorges dudit frein le justifient. Une butée 22, va limiter la course du bras 14, notamment si cette limite ne peut être assurée par celle de la course de l'équipage mobile du frein. Un doigt 16, solidaire du rotor du moteur va assurer la liaison entre ce dispositif objet de l'invention et le frein proprement dit.

A chaque mise sous tension du frein, le moteur, tout en assurant le desserrage du frein, va au travers du doigt 16, plaquer le bras 14 contre l'électro-aimant 20, dans un mouvement en sens inverse de A (le couple nécessaire sera inversé par rapport à celui du freinage, mais du même ordre de grandeur). L'électro-aimant alimenté va maintenir le bras 14 en position, le ressort 18 bandé au maximum représentant le stockage de l'énergie. Le doigt 16 pourra alors se déplacer librement dans l'espace compris entre les deux points extrêmes de sa course que représentent l'électro-aimant 20 et la butée 22 (ou la limite de course de l'équipage mobile du frein). Ainsi, l'ensemble sous tension, le dispositif de freinage par manque de courant n'aura aucune incidence sur les performances du frein qui pourra donc se déplacer librement dans tout l'espace susceptible d'être utilisé pour les différentes opérations de freinage.

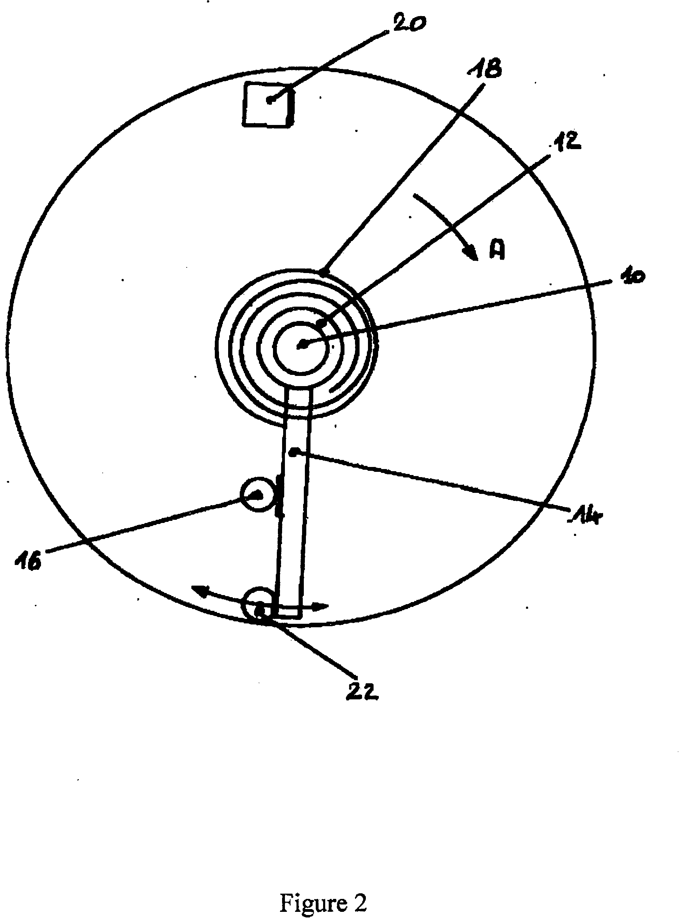

En cas de manque de courant, pour des raisons accidentelles ou volontaires, l'électro-aimant 20 va libérer le bras 14 qui sous la contrainte du ressort 18, va se plaquer contre la butée 22 (ou la limite de la course de l'équipage mobile du frein), dans sa course, il entraînera le doigt 16 (quelle que soit sa position entre 20 et 22) et assurera ainsi, au travers du rotor du moteur, le serrage du frein à sa valeur maxi et son maintien. La figure 2 représente la disposition des différents composants dans cette nouvelle configuration.

## Revendications

1. Système de serrage de plaquettes dans un frein par manque de courant, le système de serrage comprenant un moteur qui actionne le serrage à travers un arbre moteur (10), un effort sur les plaquettes variant sur une plage de 0 à 15 kN avec une déformation élastique de 1 mm, l'énergie nécessaire pour la réalisation de cette opération étant de 7,5 Joules, un couple constant de 3 Nm sur 2,5 radians étant ramené au moteur pour fournir ledit effort, ces valeurs relativement faibles du couple et de la course permettant une solution comme décrite dans ce qui suit,
le système de serrage tel que, afin de stocker, à chaque mise en route une énergie dans au moins un ressort disposé dans la structure même du frein, l'énergie qui en cas d'une coupure d'alimentation du frein, assurera le serrage du frein par manque de courant, et son maintien, le système de serrage comprend un moyeu (12) monté libre en rotation sur l'arbre moteur (10), le moyeu (12) portant un bras (14), au moins un ressort (18) étant configuré pour exercer sur le bras (14) un effort qui tend à le faire tourner dans un sens A qui correspond au sens du serrage du frein qu'il actionne, un doigt (16) solidaire de l'arbre moteur configuré pour assurer une liaison entre le système de serrage et le frein proprement dit ; le système de serrage étant en outre configuré de telle manière qu'à chaque mise sous tension du frein, ledit moteur, tout en assurant un desserrage du frein, va au travers du doigt (16) solidaire de l'arbre moteur (10), plaquer le bras (14) contre un électro-aimant (20), dans un mouvement en sens inverse du sens A, l'électro-aimant (20) alimenté par l'alimentation électrique du frein maintient le bras (14) en position et le ressort (18) bandé au maximum, stockant l'énergie ; et en cas de manque de courant, pour des raisons accidentelles ou volontaires, l'électro-aimant (20) libère le bras (14) qui, sous la contrainte du ressort (18), va le faire tourner dans le sens A; et, dans sa course, le bras (14) entraine le doigt (16) et assure ainsi, au travers de l'arbre moteur (10), le serrage du frein à une valeur maxi et son maintien.

2. Le système de serrage selon selon la revendication 1, configuré de sorte que lorsque l'électro-aimant (20) est alimenté, le doigt (16) peut se déplacer librement dans un espace compris entre deux points extrêmes de sa course qui sont respectivement l'électro-aimant (20) et la butée (22), pour que le système de serrage de plaquettes dans le frein par manque de courant n'ait aucune incidence sur les performances du frein qui pourra se déplacer librement dans tout l'espace susceptible d'être utilisé pour les différentes opérations de freinage.

3. Le système de serrage selon l'une quelconque des revendications 1 et 2, dans lequel le système est configuré pour être utilisé en frein d'urgence et en frein de parking en remplacement du "frein à main."

## Patentansprüche

1. Spannsystem der Bremsbeläge in einer Stromausfall-Bremse, wobei das Spannsystem einen Motor umfasst, der das Spannen über eine Motorwelle (10) betätigt, wobei eine auf die Bremsbeläge wirkende Kraft in einem Bereich von 0 bis 15 kN variiert, mit einer elastischen Verformung von 1 mm, wobei die für die Durchführung dieses Vorgangs erforderliche Energie 7,5 Joule beträgt, wobei ein konstantes Drehmoment von 3 Nm auf 2,5 Radiant dem Motor zugeführt wird, um diese Kraft zu liefern, wobei diese relativ niedrigen Werte des Drehmoments und des Weges eine Lösung ermöglichen, wie im Folgenden beschrieben,
das Spannsystem ist so beschaffen, dass, um bei jeder Ingangsetzung eine Energie in mindestens einer Feder zu speichern, die in der Struktur der Bremse selbst angeordnet ist, die Energie, die im Falle einer Unterbrechung der Stromversorgung der Bremse das Anziehen der Stromausfall-Bremse und ihr Halten sicherstellen wird, das Spannsystem eine Nabe (12) umfasst, die frei drehbar auf der Motorwelle (10) gelagert ist, wobei die Nabe (12) einen Arm (14) trägt, mindestens eine Feder (18), die dafür ausgelegt ist, auf den Arm (14) eine Kraft auszuüben, die bestrebt ist, ihn in einer Richtung A zu drehen, die der Richtung des Anziehens der Bremse, welche er betätigt, entspricht, und einen mit der Motorwelle fest verbundenen Finger (16), der dafür ausgelegt ist, eine Verbindung zwischen dem Spannsystem und der eigentlichen Bremse sicherzustellen; wobei das Spannsystem außerdem derart ausgebildet ist, dass bei jedem Unterspannungsetzen der Bremse der Motor, während er gleichzeitig ein Lösen der Bremse sicherstellt, über den mit der Motorwelle (10) fest verbundenen Finger (16) den Arm (14) in einer Bewegung in einer zur Richtung A entgegengesetzten Richtung an einen Elektromagneten (20) andrückt, wobei der Elektromagnet (20), der durch die Stromversorgung der Bremse gespeist wird, den Arm (14) in seiner Position und die Feder (18) maximal gespannt hält, wobei sie die Energie speichert; und im Falle eines Stromausfalls aus zufälligen oder gewollten Gründen gibt der Elektromagnet (20) den Arm (14) frei, der sich dann aufgrund der Belastung durch die Feder (18) in der Richtung A dreht; und auf seinem Weg nimmt der Arm (14) den Finger (16) mit und stellt so über die Motorwelle (10) das Festziehen der Bremse mit einem maximalen Wert und ihr Halten sicher.

2. Spannsystem nach Anspruch 1, welches derart ausgebildet ist, dass, wenn der Elektromagnet (20) gespeist wird, der Finger (16) sich frei in einem Raum zwischen zwei äußersten Punkten seines Weges bewegen kann, welche der Elektromagnet (20) bzw. der Anschlag (22) sind, damit das Spannsystem der Bremsbeläge in der Stromausfall-Bremse keinerlei Einfluss auf die Leistungseigenschaften der Bremse hat, die sich frei in dem gesamten Raum bewegen kann, der für die verschiedenen Bremsvorgänge verwendet werden kann.

3. Spannsystem nach einem der Ansprüche 1 und 2, wobei das System dafür ausgelegt ist, als Notbremse und als Parkbremse verwendet zu werden, als Ersatz für die "Handbremse".

## Claims

1. Application system for applying brake pads in a brake through lack of power, the application system comprising a motor that actuates the application via a motor shaft (10), a force on the brake pads varying over a range from 0 to 15 kN with an elastic deformation of 1 mm, the energy required to carry out this operation being 7.5 joules, a constant torque of 3 Nm over 2.5 radians being supplied by the motor to provide said force, these relatively low values of the torque and of the travel allowing a solution as described below,
the application system being such that, in order, on each start-up, to store energy in at least one spring positioned in the actual structure of the brake, namely the energy which, in the event of a break in the power supply to the brake, will allow the brake to be applied and maintained through lack of power, the application system comprises a hub (12) mounted with the freedom to rotate on the motor shaft (10), the hub (12) bearing an arm (14), at least one spring (18) being configured to apply to the arm (14) a force that tends to cause it to rotate in a direction A which corresponds to the direction of applying the brake that it is actuating, a finger (16), secured to the motor shaft, configured to provide a connection between the application system and the actual brake proper; the application system being further configured in such a way that each time power is applied to the brake, said motor, while releasing the brake, will, via the finger (16), which is secured to the motor shaft (10), press the arm (14) against an electromagnet (20) in a movement in the opposite direction to the direction A, the electromagnet (20) powered by the electrical power supply of the brake keeps the arm (14) in position and the spring (18) tensioned to the maximum, storing the energy; and in the event of a lack of power, for accidental or deliberate reasons, the electromagnet (20) releases the arm (14) which, under the stressing of the spring (18), will cause it to rotate in the direction A; and, in its travel, the arm (14) carries along with it the finger (16) and, via the motor shaft (10), thus causes the brake to be applied as firmly as possible and maintained.

2. Application system according to Claim 1, configured such that, when the electromagnet (20) is powered, the finger (16) may move freely in a space comprised between two end points of its travel that are the electromagnet (20) and the end stop (22), respectively, so that the application system for applying brake pads in the brake through lack of power has no effect on the performance of the brake which will be able to move freely in all the space liable to be used for the various braking operations.

3. Application system according to either one of Claims 1 and 2, wherein the system is configured to be used as an emergency brake and as a parking brake as a replacement for the "handbrake".
